# EUROPEAN PATENT SPECIFICATION

(11) **EP 3 107 788 B1**
(45) Date of publication and mention of the grant of the patent: **08.04.2020**
(21) Application number: 15704811.7
(22) Date of filing: 18.02.2015
(51) Int. Cl.: B60W 30/18, B60W 30/186, F02D 31/00, F02D 41/02, F02D 11/10, B60W 10/06

(54) **VEHICLE CONTROL SYSTEM AND METHOD**
FAHRZEUGSTEUERUNGSSYSTEM UND -VERFAHREN
SYSTÈME ET PROCÉDÉ DE COMMANDE DE VÉHICULE

(30) Priority: 18.02.2014 GB 201402828
(43) Date of publication of application: 28.12.2016
(73) Proprietor: Jaguar Land Rover Limited, Coventry, Warwickshire CV3 4LF (GB)
(72) Inventor: ROQUES, Olivier, Coventry Warwickshire CV3 4LF (GB); TILLING, David, Coventry Warwickshire CV3 4LF (GB)
(74) Representative: Holmes, Matthew William
(86) International application number: PCT/EP2015/053381
(87) International publication number: WO 2015/124603

(56) References cited:
- DE-A1- 10 202 520
- DE-A1- 19 752 276
- DE-A1-102007 054 399
- DE-A1-102011 088 361

## Description

### TECHNICAL FIELD

The invention relates to a method for controlling a vehicle during a pull-away phase, for example when the vehicle is driven off from a substantially stationary condition. Aspects of the invention also relate to a system, a control unit and a vehicle incorporating the system or the control unit.

### BACKGROUND

Vehicles with manual transmissions include a clutch for controlling the engagement between the engine and the gearbox/transmission, thus controlling the transfer of torque between these two components.

The clutch is controlled by the driver of the vehicle. Clutch control is usually achieved through use of a manually-operated pedal, for example in a car or truck, but the clutch may also be controlled in other ways, for example by a lever mounted on the handlebar of a motorcycle.

By engaging and disengaging drive between the engine and the gearbox the clutch can be used in various ways during use of a vehicle. However, the use of the clutch is particularly important when the vehicle is made to pull-away from a standstill and the driver is required to exercise skill to balance the operation of the clutch pedal with the accelerator pedal and, sometimes, the brake pedal in order to ensure the vehicle pulls away smoothly during a so-called 'pull-away phase'.

A pull-away phase typically progresses through the following steps. Firstly, with the engine at idle and the gearbox in neutral or 'N' the driver presses the clutch pedal which disengages the clutch and allows a gear to be selected - either a reverse gear or one of several forward gears. Usually either first or second gears will be selected for the pull-away phase due to the suitability of the gear ratios. The accelerator pedal is then pressed which raises the engine speed and therefore places the engine in a speed range having more torque reserve. Shortly after, the clutch pedal is released progressively so that the clutch 'bite point' can be found and torque begins to be transferred from the engine to the gearbox and, thus, to the driven wheels of the vehicle. Further release of the clutch pedal results in further torque transfer at which point the driver modulates the accelerator pedal to ensure that the engine speed remains high enough and is not in danger of stalling until, eventually, the clutch is fully 'out' or 'engaged' and a normal driving phase resumes.

The sequence of events described above is usually second-nature to most drivers, particularly when driving a vehicle on a straight and level road, and does not require much conscious thought. However, the balance between the clutch, brake and accelerator pedals becomes much more challenging when the pull-away phase is carried out on an incline, and/or with the vehicle laden, for example towing a trailer. During these scenarios more wheel torque is required to get the vehicle rolling from a standstill and this requires more careful attention by the driver to ensure that the engine speed does not drop when drag torque is applied through clutch release. This can often lead to over-compensation on the accelerator pedal leading to high engine speeds during engagement of the clutch. This can cause excessive wear on the clutch which can result in the clutch needing to be replaced prematurely and can also result in the emission of white smoke and an unpleasant characteristic smell. Simply fitting a heavier duty clutch is not a preferred solution since this compromises vehicle weight reduction efforts and transient response.

DE 197 52 276 A discloses to limit engine output torque during a pull-away phase of a vehicle. It is against this background that the invention has been devised.

### SUMMARY OF THE INVENTION

In an aspect of the invention there is provided a method for controlling a vehicle including an engine and a clutch, the method comprising identifying a pull-away phase of the vehicle; monitoring a torque demand parameter; setting an engine output torque limit parameter indicating the output torque that the engine must not exceed during the pull-away phase; and controlling the engine in dependence on the torque demand parameter and the engine output torque limit parameter. The engine output torque limit parameter is determine as a function of the torque demand parameter. The torque demand parameter may be determined based on a driver-determined torque demand.

Beneficially, therefore, the control method limits the torque that may be transferred through the clutch of the vehicle during a pull-away phase thereby limiting the engine speed to a predetermined level. It should be noted however that because the torque demand parameter is determined by the driver, for example through the setting of the accelerator position, the driver still has ultimate control over the engine. Therefore, the driver still retains the ability to terminate the pull-away phase for example by disengaging the clutch and/or applying the brakes to slow the vehicle back to a standstill. Control of the vehicle is not therefore transferred away from the driver at any point of the pull-away phase.

The clutch is a driver-operable clutch. In an embodiment the clutch may be a dry clutch. Operation of the clutch may be substantially manual, such that driver input is required to effect engagement or disengagement of the clutch.

The engine output torque limit parameter may be determined based on a predetermined engine speed limit. Expressed another way, the torque limit is calculated to be that which causes the engine not to exceed an engine speed threshold.

In one variant, the engine output torque limit parameter may be set by the accelerator pedal position. So, a higher torque limit may be allowed in circumstances where the driver presses the accelerator pedal more firmly. This may be desirable where the vehicle is needed to pull-away under load or up a steep incline.

A pull-away phase may be identified by monitoring for when the clutch is disengaged and/or monitoring for when the vehicle speed is below a threshold.

Conversely, a pull-away phase may be terminated by disabling the torque limit parameter once the clutch is engaged fully. A pull-away phase may also be ended by monitoring for when the vehicle speed exceeds a threshold.

Beneficially, the engine output torque limit parameter may be modified during the pull-away phase as a function of the vehicle speed. So, as the pull-away phase progresses the torque limit may be increased and, eventually, disabled altogether in order to provide full torque capability and give authority over the whole engine speed range back to the driver.

The invention also embraces a computer program product carriable on a computer readable medium which, when executed on a data processor, is operable to perform the control method described above, and also to a computer readable medium loaded with the computer program product, and also to a processing system for controlling a vehicle including an engine and a clutch, the system including a controller configured to implement the method described above, and also to a vehicle including such a processing system.

According to another aspect of the invention there is provided an engine control unit for a vehicle including an engine and a driver-operable clutch, the engine control unit being configured to implement a method as described in the preceding paragraphs. In this way, the control unit, which controls fuelling of the engine, may execute the above described method without the need for the additional control units required for vehicles having automatic transmissions. In particular, the above arrangement allows for the energy transferred through a driver-operable clutch during the pull-away phase of a vehicle to be managed by the engine control unit, i.e. by limiting torque demand, without requiring any input from a dedicated transmission control module.

Features described in connection with one embodiment are applicable to all embodiments, unless such features are incompatible.

### BRIEF DESCRIPTION OF THE DRAWINGS

One or more embodiments of the invention will now be described, by way of example only, with reference to the accompanying drawings, in which:
Figure 1 is a schematic block diagram of a system according to an embodiment of the invention;
Figure 2, 3 and 4 are block diagrams of respective algorithms, processes and or control strategies in accordance with an embodiment of the invention; and
Figures 5a, 5b and 5c are three 'pull-away' scenarios which may be governed by an embodiment of the invention.

### DETAILED DESCRIPTION OF EMBODIMENTS

Specific embodiments of the invention will now be described in which numerous features will be discussed in detail in order to provide a thorough understanding of the inventive concept as defined in the claims. However, it will be apparent to the skilled person that the invention may be put in to effect without the specific details or that variations may be made to those specific features in question. In some instances, well-known methods, techniques and structures have not been described in detail in order not to obscure the invention unnecessarily.

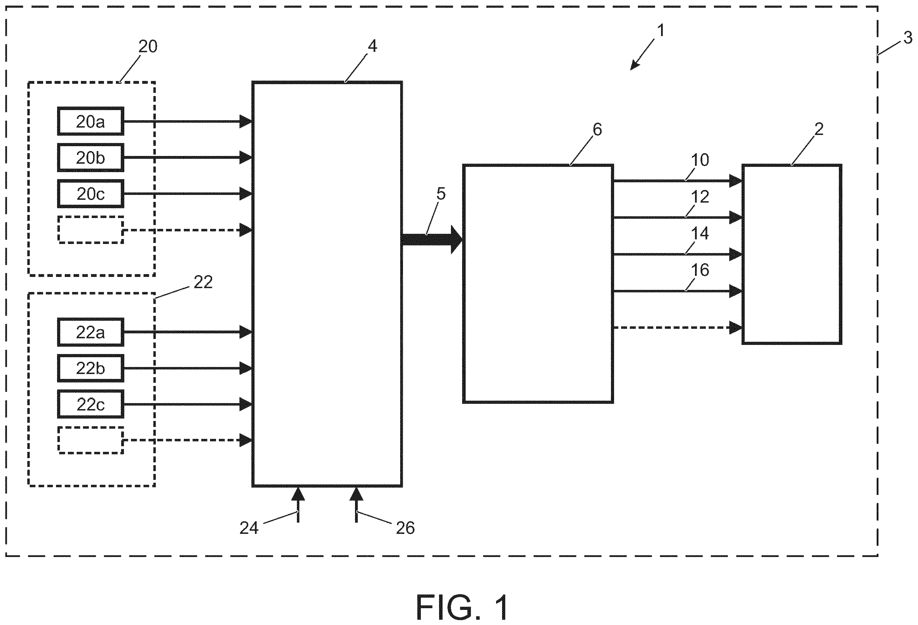

With reference firstly to Figure 1, a control system 1 is shown in block diagram form and is configured for controlling an engine 2 of a vehicle 3 in a so called 'pull-away phase' during which the vehicle transitions from a substantially stationary running condition to a 'normal' running condition. A normal running condition can be considered to be when the vehicle exceeds a predetermined speed or when a gear is fully engaged with the clutch pedal substantially released.

The objective of the control system 1 is to monitor several data inputs, such as clutch engagement and the driver torque demand, and to control the engine 2 of the vehicle 3 when a pull-away phase is identified so as to avoid excessive clutch wear. Note that the clutch is not shown specifically on Figure 1 but that its presence is implied. Such a facility provides the driver with more precise control over the vehicle during the pull-away phase and allows the driver to focus on clutch control without concern for balancing the accelerator pedal position to avoid stalling the engine or, conversely, over-revving the engine.

In general terms, the system 1 includes a torque demand management module 4 and a torque conversion module 6. The role of the torque demand management module 4 is to assess several torque request sources from various systems of the vehicle and to output a single 'demanded torque' parameter 5 to the torque conversion module 6. In turn, the torque conversion module 6 outputs several control signals that are used to control the engine of the vehicle so that it delivers engine output torque that is as close as possible to the demand torque calculated by the torque demand management module 4.

The output signals from the torque conversion module 6 are those which are necessary to control the engine and may include, as shown in Figure 1, a fuel injection timing signal 10, a fuel delivery signal 12, a valve timing signal 14 and an exhaust gas recirculation valve control signal 16. It will be appreciated that the signals mentioned here are provided by way of example and are not intended to be exhaustive. Also, it should be mentioned that the signals may be suitable for controlling either of a compression-ignition (e.g. diesel fuelled) or a spark-ignition (e.g. gasoline fuelled) engine.

The torque demand management module 4 receives a set of data inputs defined here as a plurality of external inputs 20 and a set of internal inputs 22.

The internal inputs are engine-related signals that have an effect on the output torque of the engine. Such inputs may include, for example, an engine start-up signal 20a, an idle speed control signal 20b and a maximum 'engine rev' limit signal 20c. The skilled person would understand that other internal torque demand signals are possible.

The external inputs 22 are those signals that are not directly engine related and may include, for example, a driver torque demand signal 22a, a cruise control signal 22b, and a vehicle speed limit signal 22c, for example. Again, the skilled person would understand that other external signals are possible. For example, the driver torque demand signal 22a may be replaced by a signal from an automated system such as an active/adaptive cruise control system, or an off-road speed control system, also known as Terrain Response ®.

The most influential of the external inputs is the driver torque demand signal 22a, as the torque output of the engine is largely determined by the driver torque demand signal 22a corresponding to the accelerator pedal position. The driver torque demand signal 22a is provided as an output from the accelerator pedal position of the vehicle which may be generated by a suitable sensor such as a rotary encoder associated with the accelerator pedal, as would be known to a skilled person. Needless to say, although an accelerator 'pedal' is referred to here, this is due to the context of the vehicle-type, and the term encompasses other accelerator mechanisms such as twist-grips and finger-operated levers.

The torque demand management module 4 also receives a clutch engagement position signal 24 and a vehicle speed signal 26. The clutch engagement position signal 24 may be a simple on/off signal indicating whether the clutch pedal is in a position representing a 'clutch engaged' position, in which the engine is coupled to the transmission input shaft and where typically the clutch pedal will be fully up, and a 'clutch disengaged' position in which the engine is decoupled from the transmission input shaft and where typically the clutch pedal will be fully down. Alternatively, the clutch engagement position signal 24 may be a graduated value indicating the position of the clutch pedal and, therefore, also the clutch engagement position, between its extremes of movement. The clutch position signal also may be provided by suitable sensing means associated with the clutch unit itself. Further alternatively, the degree of clutch engagement may be calculated algorithmically by comparing the engine speed with the gearbox input shaft speed (either measured directly or by reference to wheel speed) thereby deriving a value of clutch slip which is indicative of clutch engagement.

It should be noted at this point that all of the data input signals are shown as direct inputs to the torque demand management module 4. This is for clarity but it should be understood that the data input signals may be provided also by a suitable vehicle-wide communication system such as a 'CAN-bus' as is common in the art and as would be understood by a skilled person.

The above functional blocks/modules may be implemented in hardware, firmware and/or software. Although the modules are identified as separate entities here, it should be appreciated that this is for convenience in order to help the functionality of the system to be understood rather than conferring a particular structural configuration on the system. Consequently, the functionality of each of the modules may be implemented on separate hardware units or the functionality of each of the modules may be incorporated onto a common hardware unit. Similarly, the functionality embodied by the modules may be implemented in dedicated hardware, it is envisaged that the functionality will embody into existing engine management system architecture, that is to say, in the engine control unit (ECU) for example.

Returning to the Figures, the torque demand management module 4 is operable to control the engine specifically during a so-called 'pull-away phase' of the vehicle which may be considered to be the period between the vehicle being in a substantially stationary operating condition and it reaching a predetermined operating condition, which may simply be a predetermined speed, e.g. 10mph (miles per hour), although this is not essential. Alternatively, or in addition, a pull-away phase may be considered to be terminated once a more complex operating condition is recognized, for example the identification of a predetermined degree of clutch engagement and a predetermined gear position which may occur at a range of vehicle speeds depending on engine speed and the selected gear. A predetermined degree of clutch engagement may be determined through the use of a continuous sensor linked to the clutch pedal or through calculation as mentioned above.

Once a pull-away phase has been identified, the torque demand management module 4 monitors one or more input conditions and applies an engine speed limit during the pull-away phase, as will be described in further detail later. The input conditions include the driver torque demand, for example as derived from the accelerator pedal position. In the embodiment shown, the applied engine speed limit is variable in response to the driver torque demand and is selected such that the torque output of the engine is managed to avoid excessive clutch wear. During latter portions of the pull-away phase, the torque demand management module 4 may gradually remove the influence of the engine speed limit so as to allow greater torque transfer through the clutch as the vehicle speed increases.

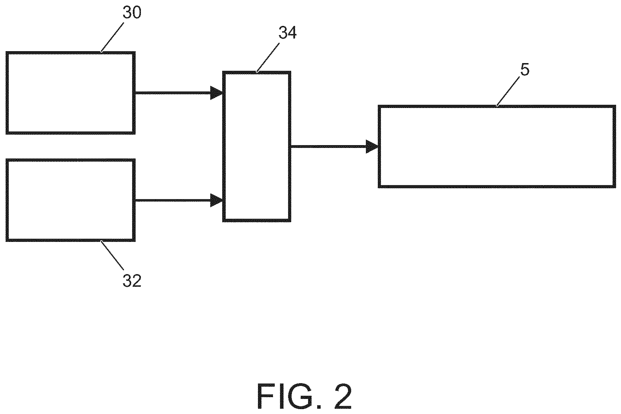

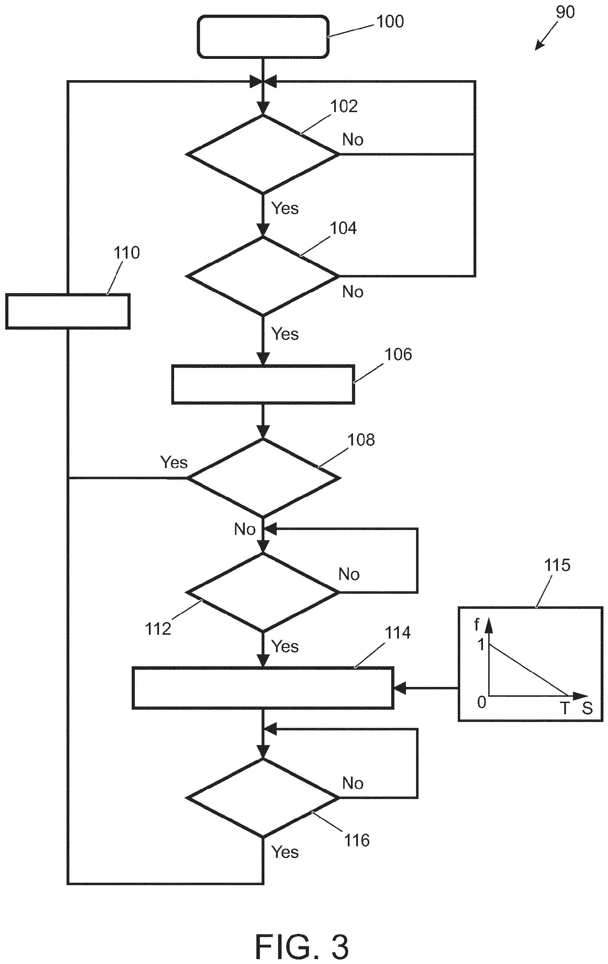

To this end, the torque demand management module 4 is operable to execute a pull-away engine control strategy, algorithm or process as illustrated in Figures 2 and 3.

Figure 2 illustrates a simple algorithm implemented by the torque demand management module 4 in which two torque input parameters are arbitrated between or evaluated. A first input parameter 30 is a pre-arbitrated torque demand and the second input parameter 32 is an engine output torque limit, the determination of which will be described in more detail later.

For simplicity, the other 'internal' and 'external' torque demands, such as the driver torque demand, that are input to the torque demand management module 4, as described with reference to Figure 1, can be considered to be subsumed into the pre-arbitrated torque demand parameter 30.

The pre-arbitrated torque demand parameter 30 and the engine output torque limit parameter 32 are input into a minimize function 34 which provides the 'arbitrated' torque demand parameter 5 to the torque conversion module 6, as shown in Figure 1. Therefore, the minimize function 34 passes the lower of either the pre-arbitrated torque demand parameter 30 or the engine output torque limit parameter 32 to the torque conversion module 6. The engine is therefore controlled in dependence on the pre-arbitrated torque demand parameter 30 and the engine output torque limit parameter 32. However, the engine output torque limit parameter 32 will only be limiting on the torque output of the engine once a set of initial conditions have been detected. If the initial conditions are not detected, the torque limit determination will remain always above the pre-arbitrated torque demand parameter 30 and so, in effect, will be inoperative. Thus, when the initial conditions are not fulfilled the minimize function 34 simply passes the pre-arbitrated torque demand parameter 30 to the torque conversion module 6, as would occur under normal running conditions of the vehicle.

The determination of the engine output torque limit parameter 32 will now be described with reference to Figure 3.

A limit calculation process 90 starts at step 100 at which point the engine output torque limit parameter 32 is not actively limiting the arbitrated torque demand parameter 5 to the engine, so the minimize function 34 is simply passing the pre-arbitrated torque demand parameter 30 to the torque conversion module 6. From step 100 the process 90 moves on to a set of two decision steps 102,104 whose function is to determine whether the vehicle is in a suitable operating condition for a pull-away phase. In essence, the steps 102, 104 monitor for when the vehicle is substantially stationary and that the clutch pedal has been pressed. Under these conditions it can be assumed that the driver of the vehicle is preparing to enter a pull-away phase by moving off from a standstill, either in a forward direction or in reverse.

In more detail, at the first decision step 102 the process 90 checks the clutch condition to determine whether the clutch pedal has been pressed. The clutch pedal position is therefore the determinant initial condition that needs to be satisfied before the process 90 can continue. This check may be performed by monitoring a clutch pedal sensor, which may in the form of a simple limit switch providing a digital 'on' or 'off' value representing whether the clutch pedal is pressed or not pressed, as appropriate. Alternatively, the clutch pedal sensor may be configured to give a precise value representing the position of the clutch pedal between its extremes of movement, for example a rotary encoder or a potentiometer. The clutch engagement position could also be determined by comparing the gearbox input speed (either directly or by derivation based on wheel speed and gear position) and the engine speed, full clutch engagement being indicated when the two values are substantially equal, but partial clutch engagement also being recognizable. It will be noted that other clutch actuator systems are also envisaged such as handlebar mounted levers, and finger-operated switches in which case equivalent sensing means are used to determine the position of the clutch, as would be understood by the skilled person.

Once the decision step 102 determines that the clutch pedal has been pressed, the process moves on to the decision step 104 at which point it performs a check on the speed of the vehicle to confirm that it is below a predetermined threshold. The pull-away phase must only be started when the vehicle is stationary or at a very low speed, such that the clutch will need to be slipped in order to bring the vehicle to a suitable speed at which the clutch can be fully engaged. The definition of 'low speed' is therefore somewhat vehicle specific, but for present purposes is envisaged to be less than 6mph by way of example.

If the vehicle speed is above the threshold, the process 90 loops back to the start of the initial condition check at step 102. Such a decision may be reached in circumstances where the vehicle is coasting at speed with the clutch disengaged, or even during gear changes, so ensures that the engine torque limitation isn't activated during inappropriate running conditions.

If the vehicle speed is below the threshold, then the process 90 moves on to step 106 at which it calculates a torque limit for the pull-away phase.

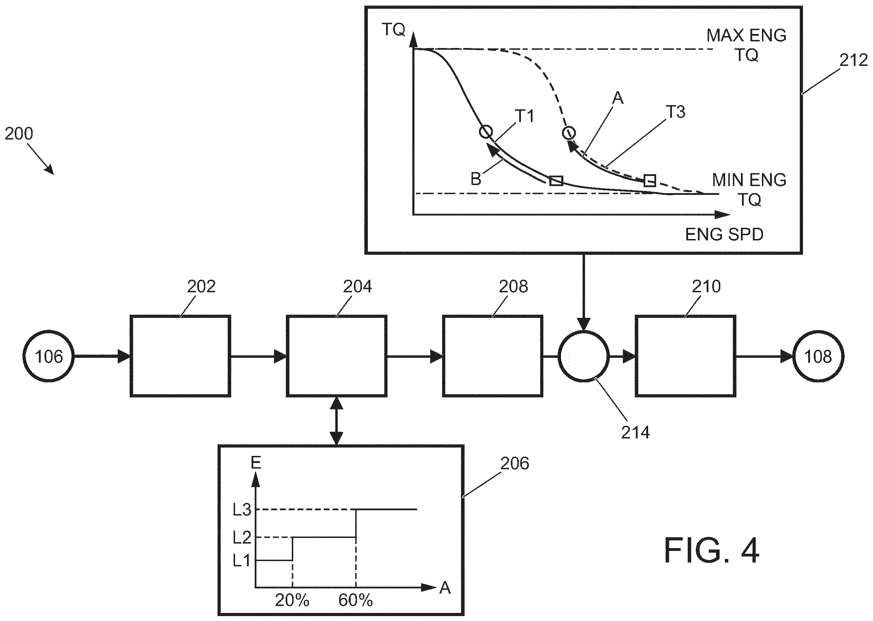

A torque limit calculation sub-process 200 is illustrated in Figure 4. Firstly, the accelerator pedal position is read at step 202. Then, at step 204, an engine speed limit is determined based on the accelerator pedal position. At this point, the sub-process 200 refers to a data structure or map 206, shown here as a predetermined relationship curve, that relates accelerator pedal position to engine speed limit. Note that the accelerator pedal position is shown on the x-axis and engine speed is shown on the y-axis.

In this embodiment the relationship connecting accelerator pedal position and engine speed is relatively simple in that an accelerator pedal position between 0% and 20% corresponds to a first engine speed limit 'L1', an accelerator pedal position between 21% and 60% corresponds to a second engine speed limit 'L2', and an accelerator pedal position between 61% and 100% corresponds to a third engine speed limit 'L3'. It will be appreciated that the engine speed limits imposed by the relationship curve 206 are much lower than the engine speeds that would ordinarily result from a torque demand corresponding to such an accelerator pedal position. A more complex relationship curve, for example a continuously variable curve, could be implemented if desired.

Once the desired engine speed limit L1, L2 or L3 has been identified based on the monitored accelerator pedal position, the sub-process 200 then converts the maximum allowed engine speed limit into a torque limit at step 208 which is then output at step 210 to the minimize function 34 as the engine output torque limit parameter 32.

As an enhancement of the torque limiting step 208, a facility may be provided to increase the torque limit towards the maximum torque capability of the engine in circumstances where the engine speed reduces away from the engine speed limit determined at step 204. This adaptive torque limit feature is particularly beneficial at the beginning of the pull-away phase at the point the vehicle just begins to move. At this point drag torque (that is to say, a negative torque) is applied on the engine by the clutch engaging which results in a reduction in the engine speed if the accelerator pedal position is maintained at a constant position.

This feature compensates for the drag torque by increasing the torque limit as the engine speed reduces. This feature is depicted in Figure 4 by data map 212 which is input into junction 214. By way of further explanation, the data map 212 shows two curves. A first curve T1 corresponds to a relatively small accelerator pedal input and is associated with engine speed limit L1 as described above. A second curve T3 corresponds to a relatively large accelerator pedal input and is associated with engine speed limit L3 as described above.

Each curve illustrates the relationship between the engine speed related torque limit as determined at step 208 (as shown on the Y-axis) and engine speed (as shown on the X-axis) and so governs how the torque limit is increased when the engine speed reduces at the onset of a pull-away phase, thereby compensating for different driving styles and driving conditions. Two scenarios will now be described to assist understanding of the function of the adaptive torque limit feature.

In a first scenario, illustrated by curve T3, during a quick pull-away phase the driver presses the accelerator pedal to result in a large pedal input which results in the engine speed increasing rapidly. Here the clutch pedal is released quickly thereby applying a high drag torque to the engine which reduces the engine speed. In order to permit a useful amount of torque to be applied to the drivetrain the torque limit is modified upwards, as illustrated by the arrow 'A' on curve T3.

In a second scenario, illustrated by curve T1, during a slow pull-away phase the driver presses the accelerator pedal to result in a small pedal input which results in the engine speed increasing more steadily as compared to the first scenario. Here, the clutch pedal is released more slowly which applies a more gradual drag torque such that the clutch 'slips' for a longer period and, as a result of this, the engine speed is reduced more slowly. In response, the torque limit is modified upwards along curve T1, as illustrated by the arrow 'B' on curve T1.

From the above discussion, it will be appreciated that at the initiation of a pull-away phase the torque demanded from the engine is selectively limited so that a predetermined engine speed limit is not exceeded. However, it is important to appreciate that control of torque demand is not taken away from the driver, but only that an upper limit to the torque demand is imposed.

Returning to Figure 3, following calculation of the engine torque limit parameter 32 through sub-process 200, the process 90 moves on to a series of steps which govern a 'blending function' during which the engine torque limit parameter 32 is gradually adapted or modified in line with the engagement of the clutch and, thus, the increasing speed of the vehicle.

At decision step 108, firstly it is checked whether the clutch is still engaged. This may be determined by checking that the clutch pedal has been substantially released or other means that would be known to the skilled person, for example by means of an algorithm which calculates the ratio of vehicle speed and engine speed and determines if this matches to known gear ratios. If it is determined that the clutch pedal has been released, that is to say that the clutch is now fully engaged, the process loops back to the start of the process 90 through step 110 at which the calculation of the engine output torque limit parameter 32 by process 200 is terminated, for example by raising the limit above the maximum engine torque capability over the whole engine speed range. In some instances, it may be acceptable to withdraw the engine speed limit once the clutch has been engaged to a predetermined point, but not necessarily engaged fully, such that there is still a degree of clutch slip. Such a determination may be made accurately by means of the aforementioned algorithm that compares the engine speed to the gearbox input shaft speed either measured directly or derived from wheel speed data.

If it is determined that the clutch is still disengaged, which may mean that the clutch pedal is fully pressed, or at a position between its extremes of movement, the process moves on to step 112 at which point the vehicle speed is monitored to confirm that it is increasing, thereby establishing that the vehicle is actually in a pull-away phase. If the driver has not yet started to release the clutch pedal, the vehicle speed will not be increasing, so the process will loop around this point until the pull-away phase progresses with an increase in vehicle speed.

Once the clutch is beyond its 'bite point' such that torque is being transferred from the engine to the transmission input shaft, and so speed of the vehicle is increasing, the process will move onto steps 114 and 116 which handle the gradual removal of the engine torque limitation by way of the blending function.

In step 114, the blending function is implemented whilst the vehicle speed is increasing, and the completion of the blending function is determined at decision step 116.

The skilled person would understand that the blending function may be achieved in various ways, and that the main consideration is that the engine torque limit should gradually be raised towards the maximum torque capability of the engine. One way in which the blending function may be achieved is to apply a blending factor 'f' to the torque limit parameter 32. The blending factor 'f' varies as the vehicle speed increases to a predetermined point 'T'. The determination of the blending factor is shown in Figure 3 as a data map 115 associating the blending factor 'f' to the engine speed 'S'.

For example the factor may be set as equal to '1' when the vehicle is stationary (0mph) and the factor may reduce to zero as the vehicle increases its speed up to a threshold speed 'T', for example 10mph. The product of the torque limit parameter 32 and the blend factor 'f' in effect therefore increases the torque limit in line with an increase in vehicle speed and the speed of progression of the blending function can be determined by appropriate selection of the blending factor f.

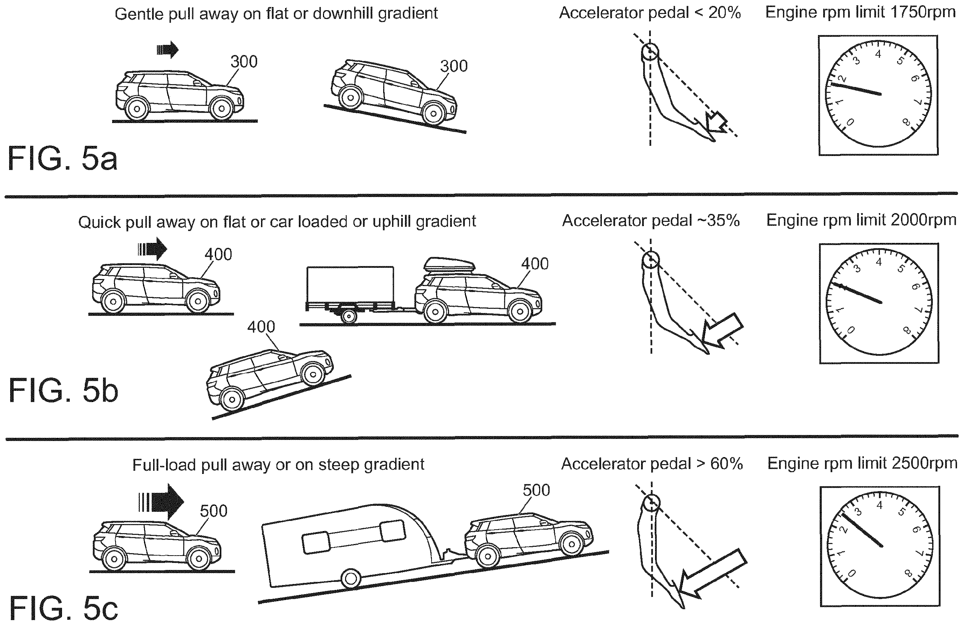

Having described the process by which a torque limit is calculated for a pull-away phase of a vehicle, the following scenarios are provided for further context as illustrated in Figures 5a, 5b and 5c.

Referring firstly to the scenario of Figure 5a, there is depicted a 'low-load' launch of a vehicle 300, as would be the case if a vehicle was required to pull-away substantially unloaded on a flat road surface or along a downhill gradient. The engine torque required to launch the vehicle in such a scenario would be low and so the driver would only press the accelerator pedal by a small amount, shown here as less than 20% of the full-range travel. The torque limit calculation process 90 would therefore impose a maximum torque limit selected such that the engine speed would not exceed 1750rpm within this range of pedal travel. As the driver releases the clutch, the engine is prevented from exceeding the set limit and the torque transfer into the transmission is restricted to a level that will not cause unnecessary wear on the clutch and limit heat loss.

Once the vehicle is underway, with the engine fully engaged with the drive train through the clutch, the process 90 is operable to raise the engine torque limit by way of the blend function 114 so that the user is able to demand a greater amount of torque production by the engine over the whole engine speed range.

The scenario depicted in Figure 5b shows vehicles 400 in a 'medium-load' launch, as might be the case if the vehicle is controlled in a quick pull-away, towing a loaded trailer, or on a gradient. In such a scenario, the driver would be conscious of the need for the engine to produce more power in order to pull-away successfully, which is represented here as an accelerator pedal position in the range of between about 20 and 60%, more specifically around 35%. As described above with reference to Figures 3 and 4, the torque limit calculation process 90 would therefore impose an engine torque limit selected such that the engine speed would not exceed 2000rpm within this range of pedal travel. Once again, the engine torque limit would be raised as the vehicle speed increases via the blending function 114.

The final scenario as depicted in Figure 5c shows vehicles 500 in a 'high-load' launch, as might be the case if the vehicle is controlled in a high-speed acceleration or towing a heavy trailer up a gradient. Here, the driver would be likely to demand high power from the engine which is represented by an accelerator pedal position in excess of 60%. As described above with reference to Figures 3 and 4, the torque limit calculation process 90 would therefore impose an engine torque limit selected such that the engine speed would not exceed 2500rpm within this range of pedal travel. Such a limit would permit the engine to produce greater torque in order to avoid stalling, but would still limit the amount of slip and, therefore, torque transfer through the clutch to such a level as would avoid excessive clutch wear. Again, the engine torque limit would be raised as the vehicle speed increased via the blending function 114.

Advantageously, in the scenarios depicted above the driver still has overall control of the vehicle and sets the torque demand via the accelerator pedal, although the maximum allowed torque generated by the engine is limited to provide a predetermined engine speed limit. So, the driver can still control engine speed with the accelerator pedal, although the maximum speed of the engine is limited during the pull-away phase. This provides a safety benefit since a failure of the system cannot lead to an unintended torque demand provided to the engine. It also maintains flexibility for the driver since if the driver decides to abort the pull-away phase by releasing the accelerator pedal and disengaging the clutch, the engine will simply return to idle.

The skilled person will understand that various modifications may be made to the specific embodiments described above without departing from the scope of the invention as defined by the claims.

For example, although in the above embodiment the engine speed limits L1, L2, and L3 have been described as 1750rpm, 2000rpm and 2500rpm, respectively, these values have been provided to provide context to the invention and so are not to be considered as limiting.

In the above embodiments the data structure or map 206 that defines the relationship between accelerator pedal position and engine speed limit provides three discrete engine speed limits associated with respective pedal positions. At a very basic level, the map could comprise a single engine speed limit, although the practicality of this approach may be somewhat limited. Multiple discrete thresholds, as described above, provide the flexibility to select multiple engine speed limits depending on how the driver operates the accelerator pedal prior to engaging the clutch. In principle, it is envisaged that other embodiments may be provided with a higher number of limit thresholds, or even a continuously variable curve rather than the 'stepped' curve shown in Figure 4.

The embodiments have been described as including a mechanically-operated clutch as would be controlled by the driver of the vehicle by a foot pedal, for example. However, the invention encompasses other clutch systems for example electronically controlled clutch systems such as would be known to the skilled person. Accordingly, references above to the clutch engagement position signal 24 apply to mechanically controlled and electronically controlled clutch systems.

## Claims

1. A method for controlling a vehicle including an engine and a driver-operable clutch, the method comprising:
identifying a pull-away phase of the vehicle;
monitoring a torque demand parameter;
calculating an engine output torque limit parameter indicating the output torque that the engine must not exceed during the pull-away phase, wherein the engine output torque limit parameter is determined as a function of the torque demand parameter; and
controlling the engine in dependence on the torque demand parameter and the engine output torque limit parameter.

2. The method of claim 1, wherein the clutch is a dry clutch.

3. The method of claim 1 or claim 2, wherein the engine output torque limit parameter is determined based on a predetermined engine speed limit.

4. The method of any one of claims 1 to 3, wherein the engine output torque limit parameter is determined as a function of the vehicle speed.

5. The method of any one of claims 1 to 4, wherein identifying a pull-away phase of the vehicle includes monitoring the clutch of the vehicle, optionally that said clutch is disengaged and/ or monitoring for when the vehicle speed is below a threshold.

6. The method of any one of claims 1 to 5, including modifying the engine output torque limit parameter during the pull-away phase.

7. The method of claim 6, wherein the engine output torque limit parameter is modified in accordance with a detected reduction in engine speed during the pull-away phase and/ or the engine output torque limit parameter is modified in dependence on an increase in the vehicle speed.

8. The method of any one of claims 1 to 7, including identifying that the pull-away phase has finished, following which the engine is controlled in dependence on the torque demand parameter.

9. The method of claim 8, wherein identifying that the pull-away phase has finished includes monitoring clutch engagement.

10. The method of claim 9, wherein identifying that the pull-away phase has finished includes monitoring for the vehicle speed to exceed a threshold.

11. A computer program product carriable on a computer readable medium which, when executed on a data processor, is operable to perform the method of any of claims 1 to 10.

12. A computer readable medium loaded with the computer program product of claim 11.

13. A processing system for controlling a vehicle including an engine and a driver-operable clutch, the system including a controller configured to implement the method of any of claims 1 to 10.

14. An engine control unit for a vehicle comprising an engine and a driver-operable clutch, the engine control unit configured to implement the method of any of claims 1 to 10.

15. A vehicle including the processing system of claim 13 or the engine control unit of claim 14.

## Patentansprüche

1. Verfahren zur Steuerung eines Fahrzeugs, umfassend einen Motor und eine vom Fahrer betätigbare Kupplung, das Verfahren Folgendes umfassend:
Identifizieren einer Anfahrphase des Fahrzeugs;
Überwachen eines Drehmomentbedarfsparameters;
Berechnen eines Motorausgangsdrehmoment-Grenzparameters, der das Ausgangsdrehmoment angibt, das der Motor während der Anfahrphase nicht überschreiten darf, wobei der Motorausgangsdrehmoment-Grenzparameter als eine Funktion des Drehmomentbedarfsparameters bestimmt wird; und
Steuern des Motors in Abhängigkeit von dem Drehmomentbedarfsparameter und dem Motorausgangsdrehmoment-Grenzparameter.

2. Verfahren nach Anspruch 1, wobei die Kupplung eine Trockenkupplung ist.

3. Verfahren nach Anspruch 1 oder Anspruch 2, wobei der Motorausgangsdrehmoment-Grenzparameter auf der Grundlage einer vorbestimmten Motordrehzahlgrenze bestimmt wird.

4. Verfahren nach einem der Ansprüche 1 bis 3, wobei der Motorausgangsdrehmoment-Grenzparameter als eine Funktion der Fahrzeuggeschwindigkeit bestimmt wird.

5. Verfahren nach einem der Ansprüche 1 bis 4, wobei das Identifizieren einer Anfahrphase des Fahrzeugs das Überwachen der Kupplung des Fahrzeugs, optional das Ausrücken der Kupplung und/oder das Überwachen, wann die Fahrzeuggeschwindigkeit unter einem Schwellenwert liegt, umfasst.

6. Verfahren nach einem der Ansprüche 1 bis 5, einschließlich der Änderung des Motorausgangsdrehmoment-Grenzparameters während der Anfahrphase.

7. Verfahren nach Anspruch 6, wobei der Motorausgangsdrehmoment-Grenzparameter entsprechend einer festgestellten Verringerung der Motordrehzahl während der Anfahrphase modifiziert wird und/oder wobei der Motorausgangsdrehmoment-Grenzparameter in Abhängigkeit von einer Erhöhung der Fahrzeuggeschwindigkeit modifiziert wird.

8. Verfahren nach einem der Ansprüche 1 bis 7, einschließlich des Feststellens, dass die Anfahrphase beendet ist, woraufhin der Motor in Abhängigkeit vom Drehmomentbedarfsparameter gesteuert wird.

9. Verfahren nach Anspruch 8, wobei das Feststellen, dass die Anfahrphase beendet ist, auch das Überwachen des Kupplungseingriffs umfasst.

10. Verfahren nach Anspruch 9, wobei das Feststellen, dass die Anfahrphase beendet ist, auch das Überwachen, ob die Fahrzeuggeschwindigkeit einen Schwellenwert überschreitet, umfasst.

11. Computerprogrammprodukt, das auf einem computerlesbaren Medium gespeichert werden kann und das bei Ausführung auf einem Datenprozessor so betrieben werden kann, dass es das Verfahren nach einem der Ansprüche 1 bis 10 ausführt.

12. Computerlesbares Medium, auf dem das Computerprogrammprodukt nach Anspruch 11 geladen ist.

13. Prozessorsystem zur Steuerung eines Fahrzeugs, das einen Motor und eine vom Fahrer betätigbare Kupplung umfasst, wobei das System eine Steuerung umfasst, die dafür konfiguriert ist, das Verfahren nach einem der Ansprüche 1 bis 10 zu implementieren.

14. Motorsteuereinheit für ein Fahrzeug, umfassend einen Motor und eine vom Fahrer betätigbare Kupplung, wobei die Motorsteuereinheit dafür konfiguriert ist, das Verfahren nach einem der Ansprüche 1 bis 10 umzusetzen.

15. Fahrzeug einschließlich des Prozessorsystems nach Anspruch 13 oder der Motorsteuereinheit nach Anspruch 14.

## Revendications

1. Procédé de commande d'un véhicule comprenant un moteur et un embrayage pouvant être actionné par un conducteur, le procédé consistant à :
identifier une phase de démarrage du véhicule ;
surveiller un paramètre de demande de couple ;
calculer un paramètre de couple limite de sortie du moteur indiquant le couple de sortie que le moteur ne doit pas dépasser pendant la phase de démarrage, le paramètre de couple limite de sortie du moteur étant déterminé en fonction du paramètre de demande de couple ; et à
commander le moteur en fonction du paramètre de demande de couple et du paramètre de couple limite de sortie du moteur.

2. Procédé selon la revendication 1, dans lequel l'embrayage est un embrayage à sec.

3. Procédé selon la revendication 1 ou 2, dans lequel le paramètre de couple limite de sortie du moteur est déterminé sur la base d'une limite de vitesse de moteur prédéfinie.

4. Procédé selon l'une quelconque des revendications 1 à 3, dans lequel le paramètre de couple limite de sortie du moteur est déterminé en fonction de la vitesse du véhicule.

5. Procédé selon l'une quelconque des revendications 1 à 4, dans lequel l'identification d'une phase de démarrage du véhicule consiste à surveiller l'embrayage du véhicule, éventuellement à surveiller que ledit embrayage est mis hors de prise et/ou à surveiller que la vitesse du véhicule est inférieure à un seuil.

6. Procédé selon l'une quelconque des revendications 1 à 5, consistant à modifier le paramètre de couple limite de sortie du moteur pendant la phase de démarrage.

7. Procédé selon la revendication 6, dans lequel le paramètre de couple limite de sortie du moteur est modifié en fonction d'une réduction détectée de la vitesse du moteur pendant la phase de démarrage et/ou le paramètre de couple limite de sortie du moteur est modifié en fonction d'une augmentation la vitesse du véhicule.

8. Procédé selon l'une quelconque des revendications 1 à 7, consistant à identifier la fin de la phase de démarrage, après quoi le moteur est commandé en fonction du paramètre de demande de couple.

9. Procédé selon la revendication 8, dans lequel l'identification de la fin de la phase de démarrage consiste à surveiller la mise en prise d'embrayage.

10. Procédé selon la revendication 9, dans lequel l'identification de la fin de la phase de démarrage consiste à surveiller la vitesse du véhicule pour dépasser un seuil.

11. Produit de programme informatique pouvant être stocké sur un support lisible par ordinateur, ledit produit de programme informatique, lorsqu'il est exécuté sur un processeur de données, peut fonctionner pour exécuter le procédé selon l'une quelconque des revendications 1 à 10.

12. Support lisible par ordinateur chargé du produit de programme informatique selon la revendication 11.

13. Système de traitement pour la commande d'un véhicule comprenant un moteur et un embrayage pouvant être actionné par le conducteur, le système comprenant un dispositif de commande conçu pour mettre en œuvre le procédé selon l'une quelconque des revendications 1 à 10.

14. Unité de commande de moteur pour un véhicule comprenant un moteur et un embrayage pouvant être actionné par le conducteur, l'unité de commande de moteur étant conçue pour mettre en œuvre le procédé selon l'une quelconque des revendications 1 à 10.

15. Véhicule comprenant le système de traitement selon la revendication 13 ou l'unité de commande du moteur selon la revendication 14.
